# DEMANDE DE BREVET EUROPEEN

(11) **EP 2 014 511 A1**
(43) Date de publication de la demande: **14.01.2009**
(21) Numéro de dépôt: 08300226.1
(22) Date de dépôt: 18.06.2008
(51) Int. Cl.: B60R 11/00, H01M 2/10

(54) **Dispositif de retenue de la batterie d'un véhicule automobile en cas de choc frontal**

(30) Priorité: 13.07.2007 FR 0705092
(71) Demandeur: Renault S.A.S., 92100 Boulogne-Billancourt (FR)
(72) Inventeur: Duguet, Eric, 75009, Paris (FR)

(57) **Abrégé**

Dispositif de retenue d'une batterie (4) disposée à l'intérieur du compartiment moteur d'un véhicule automobile, **caractérisé en ce qu**'il comprend un organe de liaison (8) s'étendant près de la face arrière (4a) de la batterie (4) transversalement à l'axe longitudinal du véhicule, entre deux points de fixation rigides (9, 10) situés de part et d'autre de la batterie (4), cet organe de liaison (8) ayant une résistance à la traction suffisante pour retenir la batterie (4) en cas de choc frontal sur le véhicule.

## Description

La présente invention concerne un dispositif de retenue d'une batterie de véhicule automobile en cas de choc frontal sur celui-ci.

La batterie des véhicules automobiles est souvent placée dans le compartiment moteur pour être à proximité du moteur afin de réduire la longueur des câbles et des conducteurs électriques.

Pour être facilement accessible lors de son remplacement, la batterie est souvent disposée entre le moteur thermique et l'un des côtés latéraux avant du véhicule.

Lorsque le groupe motopropulseur est transversal par rapport à l'axe longitudinal du véhicule la batterie est souvent placée au-dessus de la boîte de vitesses.

Lorsque la boîte de vitesses est située à gauche du moteur, ce qui est le cas pour de nombreux véhicules, la batterie est placée devant la colonne de direction, puisque celle-ci est le plus souvent à gauche.

La batterie est placée horizontalement sur une plaque en tôle. Elle est fixée sur cette plaque au moyen d'éléments métalliques qui viennent coiffer un talon prévu à la base de la batterie.

En cas de choc frontal, les éléments de fixation de la batterie cèdent et la batterie heurte violemment le tablier du véhicule qui sépare le compartiment moteur et le compartiment des occupants du véhicule.

Compte tenu de la rigidité élevée de la batterie et de la vitesse avec laquelle celle-ci heurte le tablier, celui-ci se déforme vers l'intérieur du compartiment des occupants ce qui peut blesser gravement les membres inférieurs de ces occupants, voire même causer leur mort.

En outre, la batterie peut heurter la colonne de direction du véhicule ce qui modifie l'inclinaison du volant et provoque le déploiement du coussin gonflable (air bag) dans une direction n'assurant plus la protection du conducteur.

Le but de l'invention est de remédier aux inconvénients ci-dessus.

Ce but est atteint selon l'invention grâce à un dispositif de retenue d'une batterie disposée à l'intérieur du compartiment moteur d'un véhicule automobile, caractérisé en ce qu'il comprend un organe de liaison s'étendant près de la face arrière de la batterie transversalement à l'axe longitudinal du véhicule, entre deux points de fixation rigides situés de part et d'autre de la batterie, cet organe de liaison ayant une résistance à la traction suffisante pour retenir la batterie en cas de choc frontal sur le véhicule.

L'organe de liaison forme ainsi une barrière à l'arrière de la batterie qui retient celle-ci en cas de choc frontal en évitant son intrusion dans le tablier et la colonne de direction du véhicule.

A cet effet, il est important que les deux extrémités opposées de l'organe de liaison soient fixées en des points de fixation rigides c'est-à-dire susceptibles de ne pas rompre en cas de choc frontal.

Cette condition est par exemple remplie lorsque l'un des points de fixation est situé sur le groupe motopropulseur et l'autre sur une partie rigide du châssis du véhicule.

De préférence, l'organe de liaison est un lien souple, tel qu'un câble en acier qui est facile à mettre en place et résiste très bien aux efforts de traction engendrés sur lui sous l'effet de la poussée exercée par la batterie en cas de choc frontal.

De préférence, l'un des points de fixation de l'organe de liaison est situé sur le moteur du véhicule et l'autre point de fixation de l'organe de liaison est situé sur la coupelle supportant la suspension de l'une des roues avant du véhicule. Les deux points de fixation peuvent toutefois être situés sur les coupelles supportant les suspensions de roues avant.

De préférence, les deux points de fixation rigides sont choisis de façon à être sensiblement à la même hauteur, et sont par exemple situés sur une ligne sensiblement perpendiculaire à l'axe longitudinal du véhicule automobile.

De préférence également, l'organe de liaison s'étend près du milieu de la hauteur de la face arrière de la batterie.

Cette disposition permet à l'organe de liaison d'encaisser au mieux la poussée exercée par la batterie en cas de choc frontal.

D'autres particularités et avantages de l'invention apparaîtront encore tout au long de la description ci-après.

Aux dessins annexés, donnés à titre d'exemples, non limitatifs :
- la figure 1 est une vue en plan du dessus du compartiment moteur d'un véhicule automobile, montrant le dispositif de retenue de la batterie selon l'invention,
- la figure 2 est une vue analogue à la figure 1, montrant l'efficacité du dispositif de retenue de la batterie, en cas de choc frontal du véhicule.

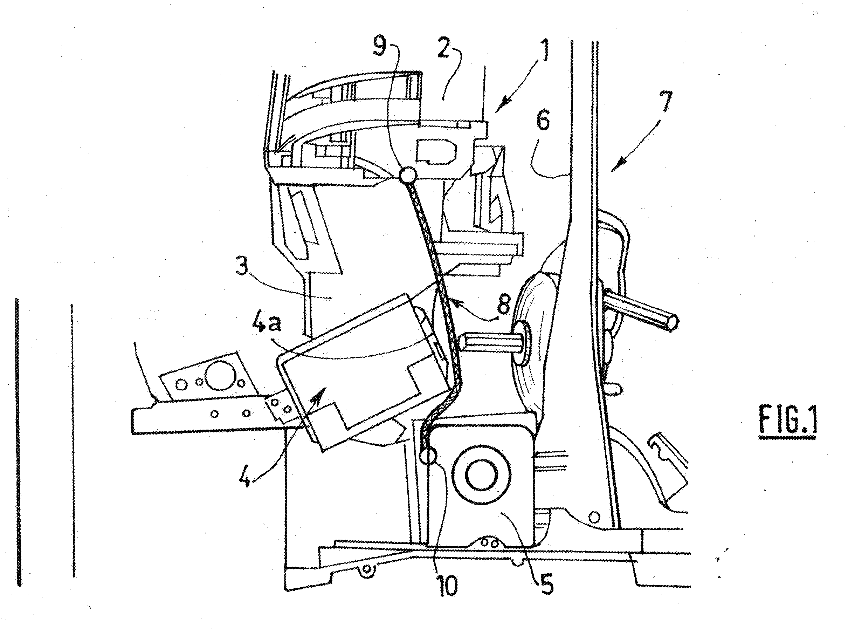

Dans l'exemple représenté sur la figure 1, le compartiment moteur 1 du véhicule renferme un moteur thermique 2 disposé transversalement par rapport à la direction longitudinale du véhicule.

A gauche de ce moteur 2 et dans l'alignement de ce moteur 2 s'étend la boîte de vitesses 3.

Au-dessus de la boîte de vitesses 3 est placée une batterie 4.

Celle-ci est fixée sur une plaque en tôle à l'aide de moyens de fixation classiques qui retiennent la base de la batterie 4.

A gauche de la batterie 4 et en arrière de celle-ci, on voit la coupelle 5 sous laquelle s'appuie le ressort de suspension de la roue avant gauche du véhicule, qui ne sont pas représentés.

A l'arrière du moteur 2, de la boîte de vitesses 3, de la batterie 4 et de la coupelle 5 s'étend le tablier 6 qui sépare le compartiment moteur 1 du compartiment 7 des occupants du véhicule.

Conformément à l'invention, le dispositif de retenue de la batterie 4 en cas de choc frontal du véhicule comprend un organe de liaison tel qu'un câble en acier 8.

Ce câble 8 s'étend près de la face arrière 4a de la batterie 4 transversalement à l'axe longitudinal du véhicule, entre deux points de fixation rigides 9, 10 situés de part et d'autre de la batterie 4. L'un 9 de ces points de fixation rigides est situé sur le moteur 2 et l'autre point de fixation rigide 10 est situé sur une partie rigide 5 du châssis du véhicule.

Le câble 8 présente une résistance à la traction suffisante pour retenir la batterie 4 en cas de choc frontal sur le véhicule.

Dans l'exemple représenté, le point de fixation 10 du câble 8 est situé sur la coupelle 5 supportant la suspension de la roue avant gauche du véhicule.

Les deux points de fixation 9, 10 du câble 8 sont de préférence situés sensiblement à la même hauteur et sont alignés sur une droite sensiblement perpendiculaire à l'axe longitudinal du véhicule.

De préférence, le câble 8 s'étend près du milieu de la hauteur de la face arrière 4a de la batterie 4.

Le câble 8 comporte à ses extrémités opposées des boucles métalliques non représentées qui permettent de le fixer aux points 9 et 10 au moyen de vis.

Ce câble 8 n'a pas besoin d'être tendu entre les deux points 9, 10 ni de toucher la face arrière de la batterie 4.

Il suffit que ce câble 8 s'étende près de la face arrière de la batterie 4.

Le câble 8 est ainsi facile à mettre en place et ne gène pas la dépose de la batterie et la remise en place d'une batterie neuve ou rechargée.

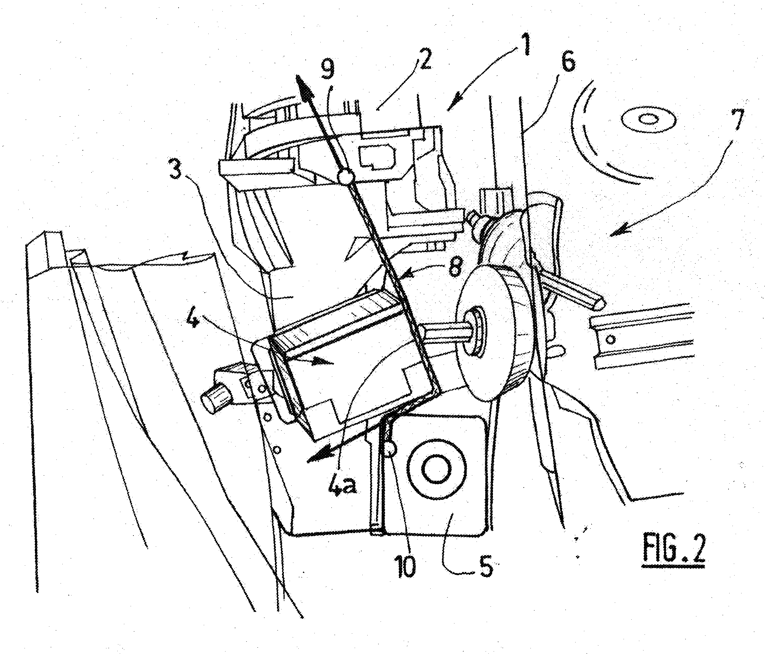

La figure 2 montre qu'en cas de choc frontal sur l'avant du véhicule, la batterie 4 subit une poussée vers le câble 8 qui se tend et maintient à distance la batterie 4.

Ainsi, la batterie 4 ne risque pas de heurter le tablier 6 et provoquer la déformation de celui-ci vers l'intérieur du compartiment des occupants, ni celle de la colonne de direction.

Par conséquent, malgré la simplicité de la réalisation du dispositif de retenue, celui-ci procure une protection efficace des occupants d'un véhicule en cas de choc frontal.

## Revendications

1. Dispositif de retenue d'une batterie (4) disposée à l'intérieur du compartiment moteur d'un véhicule automobile, **caractérisé en ce qu'**il comprend un organe de liaison (8) s'étendant près de la face arrière (4a) de la batterie (4) transversalement à l'axe longitudinal du véhicule, entre deux points de fixation rigides (9, 10) situés de part et d'autre de la batterie (4), cet organe de liaison (8) ayant une résistance à la traction suffisante pour retenir la batterie (4) en cas de choc frontal sur le véhicule.

2. Dispositif de retenue selon la revendication 1, **caractérisé en ce que** l'organe de liaison (8) est un lien souple.

3. Dispositif de retenue selon la revendication 2, **caractérisé en ce que** le lien souple est un câble en acier (8).

4. Dispositif de retenue selon l'une des revendications 1 à 3, **caractérisé en ce que** l'un (9) des points de fixation rigides de l'organe de liaison est situé sur le groupe motopropulseur et l'autre point de fixation rigide (10) est situé sur une partie rigide (5) du châssis du véhicule

5. Dispositif de retenue selon l'une des revendications 1 à 4, **caractérisé en ce que** l'un (9) des points de fixation de l'organe de liaison (8) est situé sur le moteur (2) du véhicule.

6. Dispositif de retenue selon l'une des revendications 1 à 5, **caractérisé en ce que** l'autre point de fixation (10) de l'organe de liaison (8) est situé sur la coupelle (5) supportant la suspension de l'une des roues avant du véhicule.

7. Dispositif de retenue selon l'une des revendications 1 à 6, **caractérisé en ce que** les deux points de fixation (9, 10) de l'organe de liaison (8) sont situés sensiblement à la même hauteur.

8. Dispositif de retenue selon l'une des revendications 1 à 7, **caractérisé en ce que** l'organe de liaison (8) s'étend près du milieu de la hauteur de la face arrière (4a) de la batterie (4).
